(19) Europäisches Patentamt
European Patent Office
Office européen des brevets

(11) Veröffentlichungsnummer: **0 335 414 B1**

(12) # EUROPÄISCHE PATENTSCHRIFT

(45) Veröffentlichungstag der Patentschrift: **19.05.93**

(51) Int. Cl.$^5$: **C08G 77/06**, C08J 3/09

(21) Anmeldenummer: **89105682.2**

(22) Anmeldetag: **31.03.89**

(54) **Organosole von Organopolysiloxanen und Verfahren zu ihrer Herstellung.**

(30) Priorität: **31.03.88 DE 3811155**

(43) Veröffentlichungstag der Anmeldung:
**04.10.89 Patentblatt 89/40**

(45) Bekanntmachung des Hinweises auf die Patenterteilung:
**19.05.93 Patentblatt 93/20**

(84) Benannte Vertragsstaaten:
**AT BE CH DE ES FR GB IT LI NL SE**

(56) Entgegenhaltungen:
**EP-A- 0 206 525**
**EP-A- 0 216 047**
**DE-A- 2 142 598**
**US-A- 4 424 297**

(73) Patentinhaber: **WACKER-CHEMIE GMBH**
**Hanns-Seidel-Platz 4**
**W-8000 München 83(DE)**

(72) Erfinder: **Wolfgruber, Matthias, Dr. Dipl.-Chem.**
**Moosbrunnerstrasse 13**
**W-8263 Burghausen(DE)**
Erfinder: **Deubzer, Bernward, Dr. Dipl.-Chem.**
**Virchowstrasse 14**
**W-8263 Burghausen(DE)**
Erfinder: **Frey, Volker, Dr. Dipl.-Chem.**
**Jahnweg 5**
**W-8263 Burghausen(DE)**
Erfinder: **Oswaldbauer, Helmut**
**Hartstrasse 1**
**W-8399 Stubenberg(DE)**

EP 0 335 414 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Organosole von Organopolysiloxanen und ein Verfahren zu ihrer Herstellung.

Nach EP-A-216 047 (offengelegt 1.4.1987, Gupta Goutam, THE SHERWIN-WILLIAMS COMPANY) ist es bekannt, Organosole organisch modifizierter Kieselsäuren herzustellen, indem Wasser und eine katalytische Menge einer Säure mit einem Kieselsäureorganosol, dessen organisches Lösungsmittel wasserlöslich ist, vermischt wird, stufenweise ein Trialkoxysilan zu dieser Mischung zugegeben wird und alles Wasser dann entfernt wird.

Es bestand die Aufgabe, Organosole von Organopolysiloxanen mit einer durchschnittlichen Teilchengröße von 10 bis 150 nm herzustellen, die äußerst beständig sind, einen Feststoffgehalt an Organopolysiloxan von 30 bis 50 Gewichts-%, bezogen auf das Gesamtgewicht des Organosols, aufweisen und die mit unpolaren organischen Lösungsmitteln und polymerisierbaren organischen Monomeren mischbar sind. Es bestand weiterhin die Aufgabe ein Verfahren bereitzustellen, mit dem diese Organosole auf technisch einfache Weise erhalten werden. Diese Aufgaben werden durch die Erfindung gelöst.

Gegenstand der Erfindung sind Organosole von Organopolysiloxanen, wobei diese Organosole durch Zugabe von wasserlöslichen organischen Lösungsmitteln oder deren Gemischen oder wasserlöslichen Gemischen von wasserlöslichen und nicht wasserlöslichen organischen Lösungsmitteln zu wäßrigen, kolloidalen Suspensionen von Organopolysiloxanen,
die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgatoren mit einer Geschwindigkeit von höchstens 5 Mol Organosiliciumverbindung je Stunde und Liter Wasser gewonnen wurden,
und anschließendem destillativen Entfernen des Wassers hergestellt wurden.

Gegenstand der Erfindung ist weiterhin ein Verfahren zur Herstellung von Organosolen von Organopolysiloxanen, dadurch gekennzeichnet, daß zu wäßrigen kolloidalen Suspensionen von Organopolysiloxanen,
die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgatoren mit einer Geschwindigkeit von höchstens 5 Mol Organosiliciumverbindung je Stunde und Liter Wasser gewonnen wurden,
wasserlösliche organische Lösungsmittel oder deren Gemische oder wasserlösliche Gemische von wasserlöslichen und nicht wasserlöslichen organischen Lösungsmitteln zugegeben werden und das Wasser anschließend destillativ entfernt wird.

Aus US 3 433 780 (ausgegeben 18. März 1969, J. Cekada, Je. 2nd D.R. Weyenberg, Dow Corning Corporation) und US 4 424 297 (ausgegeben 3. Januar 1984, A.E. Bey, Dow Corning Corporation) sowie aus der deutschen Patentanmeldung 3 717 075, in denen die Herstellung der erfindungsgemäß eingesetzten wäßrigen, kolloidalen Suspensionen von Organopolysiloxanen beschrieben ist, ist bekannt, daß das beim Herstellungsverfahren entstehende Alkanol bereits in geringen Konzentrationen die kolloidalen Suspensionen von Organopolysiloxanen koagulieren kann. Es war daher überraschend, daß durch Zugabe von wasserlöslichen organischen Lösungsmitteln oder deren Gemischen oder wasserlöslichen Gemischen von wasserlöslichen und nicht wasserlöslichen organischen Lösungsmitteln zu den wäßrigen, kolloidalen Suspensionen von Organopolysiloxanen Organosole dieser Organopolysiloxane hergestellt werden können.

Zur Herstellung der erfindungsgemäßen Organosole von Organopolysiloxanen bzw. bei dem erfindungsgemäßen Verfahren werden wäßrige, kolloidale Suspensionen von bei Raumtemperatur festen Organopolysiloxanen aus Einheiten der Formel

$$R_xSi(OR^1)_yO_{\frac{4-x-y}{2}}$$

eingesetzt, wobei x 0, 1, 2 oder 3, durchschnittlich 1,0 bis 2,0 und y 0, 1 oder 2, durchschnittlich 0,0 bis 0,5 ist und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substituenten aufweisen kann, bedeutet und $R^1$ gleich oder verschieden sein kann, ein Wasserstoffatom oder einen Alkyl- oder Alkoxyalkylenrest mit jeweils 1 bis 4 Kohlenstoffatom(en) je Rest bedeutet.

Zur Herstellung der erfindungsgemäßen Organosole von Organopolysiloxanen bzw. bei dem erfindungsgemäßen Verfahren werden vorzugsweise nur solche bei Raumtemperatur feste Organopolysiloxane

eingesetzt, die in den verwendeten organischen Lösungsmitteln unlöslich sind.

Die zur Herstellung der erfindungsgemäßen Organosole von Organopolysiloxanen bzw. bei dem erfindungsgemäßen Verfahren eingesetzten wäßrigen, kolloidalen Suspensionen von bei Raumtemperatur festen Organopolysiloxanen haben einen durchschnittlichen Teilchendurchmesser von 10 bis 150 nm.

Die zur Herstellung der erfindungsgemäßen Organosole von Organopolysiloxanen bzw. bei dem erfindungsgemäßen Verfahren verwendeten wäßrigen, kolloidalen Suspensionen von bei Raumtemperatur festen Organopolysiloxanen sind, wie eingangs erwähnt, in US 3 433 780 und US 4 424 297 sowie in der deutschen Patentanmeldung 37 17 075 beschrieben.

Bei der Herstellung der erfindungsgemäßen Organosole von Organopolysiloxanen bzw. bei dem erfindungsgemäßen Verfahren werden Silane oder Gemische von Silanen der Formel

$$R_xSi(OR^2)_{4-x}$$

eingesetzt, wobei x und R jeweils die oben dafür angegebene Bedeutung haben und wobei $R^2$ gleich oder verschieden sein kann, einen Alkyl- oder Alkyloxyalkylenrest mit 1 bis 4 Kohlenstoffatom(en) je Rest oder einen Rest der Formel $-COCH_3$, $-COC_2H_5$ oder $-CH_2CH_2OH$ bedeutet.

Wird nur eine einzige Art eines derartigen Silans verwendet, so muß x natürlich den Wert 1 haben.

Vorzugsweise werden Gemische von mindestens zwei verschiedenen Silanen der vorstehend genannten Formel mit verschiedenem Wert von x verwendet.

Besonders bevorzugt werden Gemische von Silanen der Formel $RSi(OR^2)_3$ und $R_2Si(OR^2)_2$ eingesetzt, worin R und $R^2$ jeweils die oben däfur angegebene Bedeutung haben und wobei der Anteil an $R_2Si(OR^2)_2$ im Gemisch höchstens 50 Molprozent beträgt.

Bei der Herstellung der erfindungsgemäßen Organosole von Organopolysiloxanen bzw. bei dem erfindungsgemäßen Verfahren können auch Teilhydrolysate der vorstehend genannten Silane bzw. Silangemische mit nicht mehr als 10 Si-Atomen je Teilhydrolysat eingesetzt werden.

Es werden selbstverständlich solche Silane bzw. Silangemische oder solche Teilhydrolysate dieser Silane bzw. Silangemische verwendet, die zu Organopolysiloxanen führen, die in den verwendeten organischen Lösungsmitteln unlöslich sind.

Zur Herstellung der erfindungsgemäßen Organosole von Organopolysiloxanen bzw. bei dem erfindungsgemäßen Verfahren können gegebenenfalls von Alkoxygruppen freie Organo(poly)siloxane mit höchstens 8 Siloxaneinheiten je Molekül im Gemisch mit mindestens einem Alkoxysilan und/oder dessen Teilhydrolysat eingesetzt werden. Als Organo(poly)siloxane mit höchstens 8 Siloxaneinheiten je Molekül können beispielsweise lineare Organo(poly)siloxane der Formel

$$R_3SiO(SiR_2O)_nSiR_3$$

verwendet werden, wobei n 0 oder eine ganze Zahl im Wert von 1 bis 6 ist und worin R die oben däfur angegebene Bedeutung hat. Vorzugsweise ist n 0 und besonders bevorzugt ist Hexamethyldisiloxan. Als Organo(poly)siloxane mit höchstens 8 Siloxaneinheiten je Molekül können beispielsweise auch cyclische Organo(poly)siloxane der Formel

$$(R_2SiO)_m$$

verwendet werden, wobei m eine ganze Zahl im Wert von 3 bis 8, vorzugsweise 4, ist und worin R die oben dafür angegebene Bedeutung hat.

Als Organo(poly)siloxan im Gemisch mit mindestens einem Alkoxysilan wird vorzugsweise Hexaorganodisiloxan im Gemisch mit Tetraalkoxysilan im Molverhältnis von 1 : 9 bis 1 : 1 eingesetzt. Besonders bevorzugt wird Hexamethyldisiloxan im Gemisch mit Tetraethylsilikat im Molverhältnis von 1 : 4 bis 1 : 2 eingesetzt.

Des weiteren wird als Organo(poly)siloxan im Gemisch mit mindestens einem Alkoxysilan vorzugsweise cyclisches Organosiloxan im Gemisch mit Trialkoxysilan, insbesondere tetrameres cyclisches Organosiloxan im Gemisch mit Trialkoxysilan eingesetzt.

Es werden nur solche Gemische von Alkoxygruppen freiem Organo(poly)siloxan mit höchstens 8 Siloxaneinheiten je Molekül und Alkoxysilan verwendet, die zu bei Raumtemperatur festen Organopolysiloxanen führen, die in den verwendeten organischen Lösungsmitteln unlöslich sind.

Beispiele für Kohlenwasserstoffreste als SiC-gebundene organische Reste und damit ebenfalls als Reste R in den oben angegebenen Formeln sind Alkylreste, wie der Methyl-, Ethyl-, n-Propyl-, Isopropyl-, n-Butyl-, sec.-Butyl-, Amyl-, Hexyl-, $\beta$-Ethylhexyl- und Heptylrest; Alkenylreste, wie

der Vinyl- und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Vinyl- und Phenylrest.

Beispiele für substituierte Kohlenwasserstoffreste als SiC-gebundene organische Reste und damit ebenfalls als Reste R in den oben angegebenen Formeln sind halogenierte Kohlenwasserstoffreste wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest; und Reste der Formel

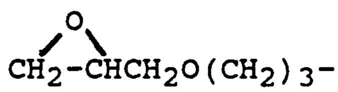 und

$HOCH_2CH(OH)CH_2SCH_2CH_2-$ .

Vorzugsweise sind höchstens 20 % der Anzahl der organischen Reste in den eingesetzten Organosiliciumverbindungen substituierte Kohlenwasserstoffreste.

Beispiele für Kohlenwasserstoffreste $R^1$ sind Alkylreste, wie der Methyl-, Ethyl-, n-Propyl-, Isopropyl-, n-Butyl-, sec.-Butyl- und tert.-Butylrest und Alkoxyalkylenreste, wie der Methoxyethylen- und Ethoxyethylenrest. Besonders bevorzugt sind der Methyl- und Ethylrest. Alle Beispiele für Kohlenwasserstoffreste $R^1$ gelten im vollen Umfang auch für die Kohlenwasserstoffreste $R^2$.

Die zur Herstellung der erfindungsgemäßen Organosole von Organopolysiloxanen bzw. bei dem erfindungsgemäßen Verfahren verwendeten Emulgatoren umfassen Carbonsäuren mit 9 - 20 C-Atomen, aliphatisch-substituierte Benzolsulfonsäuren mit mindestens 6 C-Atomen in den aliphatischen Substituenten, aliphatisch-substituierte Naphthalinsulfonsäuren mit mindestens 4 C-Atomen in den aliphatischen Substituenten, aliphatische Sulfonsäuren mit mindestens 6 C-Atomen in den aliphatischen Substituenten, Silylalkylsulfonsäuren mit mindestens 6 C-Atomen in den Alkylsubstituenten, aliphatisch-susbstituierte Diphenylethersulfonsäuren mit mindestens 6 C-Atomen in den aliphatischen Substituenten, Alkylhydrogensulfate mit mindestens 6 C-Atomen in den Alkylsubstituenten, quaternäre Ammoniumhalogenide und quaternäre Ammoniumhydroxide. Alle genannten Säuren können als solche oder gegebenenfalls im Gemisch mit ihren Salzen verwendet werden.

Wenn anionische Emulgatoren eingesetzt werden, ist es vorteilhaft, solche zu verwenden, deren aliphatische Substituenten mindestens 8 und insbesondere 12 C-Atome enthalten. Spezielle Beispiele für aliphatische Substituenten sind Octyl-, Decyl-, Dodecyl-, Cetyl-, Stearyl-, Myricyl-, Oleyl-, Nonenyl-, Octinyl-, Phytyl- und Pentadecadienylreste. Aliphatisch substituierte Benzolsulfonsäuren sind als anionische Emulgatoren bevorzugt. Wenn kationische Emulgatoren benutzt werden, ist es vorteilhaft, Halogenide und insbesondere Chloride und Bromide zu verwenden.

Die Emulgatormenge kann, gemessen an der außerordentlich geringen Teilchengröße von 10 bis 150 nm der bei der Herstellung der Organosole von Organopolysiloxanen eingesetzten, wäßrigen kolloidalen Suspension von bei Raumtemperatur festen Organopolysiloxanen, ungewöhnlich gering sein. Der Emulgator wird vorzugsweise in Mengen von 0,5 bis 2,9 Gew.-% besonders bevorzugt in Mengen von 1,5 bis 2,0 Gew.-%, jeweils bezogen auf das Gewicht der zur Herstellung der Organosole von Organopolysiloxanen gemäß Anspruch 1 eingesetzten Organosiliciumverbindung, verwendet.

Bei vielen Anwendungen können aber auswaschbare oder zur Diffusion fähige, an Grenzflächen sich anreichernde Emulgatoren störend wirken. Es können daher bei der Herstellung der erfindungsgemäß einzusetzenden kolloidalen Suspensionen von Organopolysiloxanen anstelle der oben genannten Emulgatoren vorteilhafter Additionssalze von Essigsäure an 3-Aminopropyltrimethoxysilan oder 3-Aminopropyltriethoxysilan, besonders vorteilhaft Additionssalze von Essigsäure an N-(2-Aminoethyl)-3-aminopropyltrimethoxysilan oder N-(2-Aminoethyl)-3-aminopropyltriethoxysilan verwendet werden, die zusammen mit den erfindungsgemäß einzusetzenden Organosiliciumverbindungen hydrolysiert und kondensiert werden und dabei in das Organopolysiloxangerüst miteingebaut werden.

3 – Aminopropyltrimethoxysilan bzw. 3 – Aminopropyltriethoxysilan sowie N – (2 – Aminoethyl) – 3 – aminopropyltrimethoxysilan bzw. N – (2 – Aminoethyl)3 – aminopropyltriethoxysilan wird dabei vorzugsweise in Mengen von 5 bis 20 Gew. – % und Essigsäure in Mengen von 4 bis 15 Gew. – %, jeweils bezogen auf das Gewicht der gemäß Anspruch 1 einzusetzenden Organosiliciumverbindung eingesetzt.

Des weiteren können auch Additionssalze von Natriumsulfit an 3 – Glycidoxypropyltrimethoxysilan oder 3 – Glycidoxypropyltriethoxysilan verwendet werden.

Die zur Herstellung der erfindungsgemäßen Organosole von Organopolysiloxanen bzw. bei dem erfindungsgemäßen Verfahren eingesetzten wäßrigen kolloidalen Suspensionen von bei Raumtemperatur festen Organopolysiloxanen werden vorzugsweise durch Zugabe von der im Anspruch 1 genannten Organosiliciumverbindung zu Wasser in Gegenwart von Emulgator mit einer Geschwindigkeit von höchstens 5 Mol Organosiliciumverbindung je Stunde und Liter Wasser, insbesondere von 0,5 bis 1,0 Mol Organosiliciumverbindung je Stunde und Liter Wasser, und anschließender Abdestillation des hydrolytisch gebildeten Alkanols hergestellt. Die zur Herstellung der Organosole eingesetzten wäßrigen kolloidalen Suspensionen von bei Raumtemperatur festen Organopolysiloxanen können im sauren, neutralen oder alkalischen Milieu hergestellt werden. Die Herstellung erfolgt vorzugsweise bei 15° bis 90°C, besonders bevorzugt bei 60° bis 85°C, und vorzugsweise beim Druck der umgebenden Atmosphäre, also bei 1020 hPa (abs.) oder etwa 1020 hPa (abs.), oder falls gewünscht, auch bei höheren oder niedrigeren Drücken.

Das Verfahren zur Herstellung der wäßrigen, kolloidalen Suspensionen von bei Raumtemperatur festen Organopolysiloxanen kann diskontinuierlich, halbkontinuierlich oder vollkontinuierlich durchgeführt werden. Vorzugsweise wird es vollkontinuierlich durchgeführt.

Die kolloidalen wäßrigen Suspensionen von bei Raumtemperatur festen Organopolysiloxanen werden vorzugsweise nach dem in der deutschen Patentanmeldung 37 17 075 beschriebenen Verfahren hergestellt, bei dem kontinuierlich voneinander getrennt die im Anspruch 1 genannte Organosiliciumverbindung und das Wasser, wobei mindestens einer der beiden Stoffe Emulgator enthält, einem Reaktor zugeführt werden. Bei dem Reaktor kann es sich um einen Rohrreaktor, einen Rührkessel, eine Kesselkaskade, einen Kreislaufreaktor, einen Hordenreaktor oder andere gebräuchliche Reaktoren handeln. Der Reaktor ist gegebenenfalls mit einer Vorrichtung zum Wärmen oder Kühlen versehen. Bevorzugt wird ein Rohrreaktor eingesetzt, bei dem das Wasser am Anfang des Rohrreaktors und die Organosiliciumverbindung uber mehrere Einspeisungsstellen, die entlang der Längsachse des Rohrreaktors angeordnet sind, kontinuierlich zugegeben werden. Nach einer Verweilzeit im Reaktor, die ausreicht, die eingesetzte Organosiliciumverbindung zu hydrolysieren und kondensieren, tritt die wäßrige Suspension aus dem Reaktor kontinuierlich aus. Die Verweilzeit beträgt mindestens 5 min vorzugsweise 30 bis 60 min. Aus der aus dem Reaktor austretenden wäßrigen Suspension wird das bei der Hydrolyse gebildete Alkanol kontinuierlich abdestilliert. Vorzugsweise wird das Alkanol über eine Kurzwegdestillation entfernt. Geeignet hierfür sind beispielsweise Dünnschichtverdampfer. Zur Erhöhung des Feststoffgehaltes an Organopolysiloxan wird die wäßrige Suspension wieder in den Reaktor kontinuierlich rückgeführt, wo ihr erneut kontinuierlich Organosiliciumverbindung und gegebenenfalls Emulgator zugeführt wird. Die wäßrige Suspension kann gegebenenfalls mehrmals im Kreis geführt werden, bis der gewünschte Feststoffgehalt an Organopolysiloxan erreicht wird. Ein Teil der anfallenden wäßrigen Suspension mit dem gewünschten Feststoffgehalt an Organopolysiloxan wird dann kontinuierlich abgenommen, der Rest wird in den Reaktor kontinuierlich rückgeführt und erneut kontinuierlich mit Wasser, Organosiliciumverbindung und Emulgator versetzt.

Die zur Herstellung der erfindungsgemäßen Organosole von Organopolysiloxanen bzw. bei dem erfindungsgemäßen Verfahren eingesetzten wäßrigen kolloidalen Suspensionen von bei Raumtemperatur festen Organopolysiloxanen weisen vorzugsweise einen Feststoffgehalt von bis zu 20 Gew. – %, jeweils bezogen auf das Gesamtgewicht der Suspension, auf.

Bei der Herstellung der erfindungsgemäßen Organosole von Organopolysiloxanen bzw. bei dem erfindungsgemäßen Verfahren werden als wasserlösliche organische Lösungsmittel vorzugsweise
niedere Alkanole wie Methanol, Ethanol, n – Propanol, i – Propanol sowie n – Butanol,
Alkoxyalkanole wie Methoxyethanol, Ethoxyethanol sowie Propoxyethanol,
Ethylenglykole mit 1 bis 6 Ethoxyeinheiten,
Aceton und Tetrahydrofuran eingesetzt.

Bei der Herstellung der erfindungsgemäßen Organosole von Organopolysiloxanen bzw. bei dem erfindungsgemäßen Verfahren werden weiterhin als wasserlösliche organische Lösungsmittel vorzugsweise bei Raumtemperatur flüssige und feste Polyethylenglykole sowie bei Raumtemperatur feste Blockcopolymere aus Polyethylenglykolen und Polypropylenglykolen mit hohem Anteil an Polyethylenglykolen eingesetzt.

Bei der Herstellung der erfindungsgemäßen Organosole von Organopolysiloxanen bzw. bei dem erfindungsgemäßen Verfahren werden als nicht wassserlösliche organische Lösungsmittel vorzugsweise

Cyclohexanon, Methylisobutylketon und Methacrylsäureester verwendet. Nicht wasserlösliche organische Lösungsmittel werden dabei nur im Gemisch mit wasserlöslichen Lösungsmitteln wie niederen Alkanolen eingesetzt.

Bei der Herstellung der erfindungsgemäßen Organosole von Organopolysiloxanen bzw. bei dem erfindungsgemäßen Verfahren werden weiterhin als nicht wasserlösliche organische Lösungsmittel vorzugsweise höhere Alkanole mit 8 bis 18 Kohlenstoffatomen, bei Raumtemperatur feste Polypropylenglykole und Alkylacetate mit $C_6$- bis $C_{13}$-Alkylresten eingesetzt, wobei auch diese nicht wasserlöslichen organischen Lösungsmittel nur im Gemisch mit wasserlöslichen Lösungsmitteln wie niederen Alkanolen eingesetzt werden.

Wasserlösliche organische Lösungsmittel oder deren Gemische oder wasserlösliche Gemische von wasserlöslichen und nicht wasserlöslichen Lösungsmitteln werden bei der Herstellung der erfindungsgemäßen Organosole von Organopolysiloxanen bzw. bei dem erfindungsgemäßen Verfahren mindestens in solchen Mengen zugegeben, die zur Herstellung eines vollständig klaren Organosols benötigt werden. Diese organischen Lösungsmittel werden daher vorzugsweise in Mengen von mindestens 50 Gewichts-%, insbesondere in Mengen von 100 bis 300 Gewichts-%, jeweils bezogen auf das Gesamtgewicht der jeweils eingesetzten wäßrigen, kolloidalen Suspension von Organopolysiloxanen, eingesetzt.

Die oben genannten Lösungsmittel bzw. Lösungsmittelgemische werden bei dem erfindungsgemäßen Verfahren den wäßrigen, kolloidalen Suspensionen von Organopolysiloxanen vorzugsweise auf ein Mal und möglichst schnell zugegeben. Dabei ist bei Zugabe von Aceton, Tetrahydrofuran oder niederen Alkanolen anfänglich eine reversible Koagulation, d.h. eine Trübung oder ein Niederschlag zu beobachten; weitere Lösungsmittelzugabe führt jedoch zu einer vollständigen Peptisation, d.h. zu einem klaren Organosol.

Konzentrierte und wasserfreie Organosole von Organopolysiloxanen werden vorzugsweise erhalten durch Abdestillieren des Wassers bei 50 bis 90 °C bei 1 bis 1000 hPa (abs.) nach Zugabe der oben genannten Lösungsmittel bzw. Lösungsmittelgemische zu den wäßrigen, kolloidalen Suspensionen von Organopolysiloxanen. In der Regel destillieren dabei binäre und ternäre Azeotrope ab. Tritt dabei während der Destillation eine Eintrübung in dem Organosol auf, wird diese durch Zugabe von niederen Alkanolen beseitigt. Durch die anschließende Destillation sind auch Organosole von Organopolysiloxanen in aprotischen Lösungsmitteln, wie z.B. Cyclohexanon zugänglich, da aus einem vorher zugegebenen wasserlöslichen Gemisch z.B. Cyclohexanon und Ethanol, Wasser zusammen mit Ethanol und Cyclohexanon als ternäres Azeotrop abdestilliert werden kann. In einem solchen wasserlöslichen Gemisch von wasserlöslichen und nicht wasserlöslichen organischen Lösungsmitteln ist das wasserlösliche organische Lösungsmittel daher vorzugsweise maximal in solchen Mengen vorhanden wie zum vollständigen Entfernen des Wassers als ternäres Azeotrop bei der Destillation benötigt wird. Wasserlösliche organische Lösungsmittel oder deren Gemische oder wasserlösliche Gemische von wasserlöslichen und nicht wasserlöslichen organischen Lösungsmitteln werden vorzugsweise in solchen Mengen zugegeben, daß nach vollständiger Entfernung des Wassers als Azeotrop Organosole von Organopolysiloxanen gewonnen werden, die einen Feststoffgehalt an Organopolysiloxan von vorzugsweise 30 bis 50 Gewichts-%, jeweils bezogen auf das Gesamtgewicht des Organosols, aufweisen.

Die erfindungsgemäßen Organosole von Organopolysiloxanen sind äußerst beständig. So halten sie ohne Veränderung mehrwöchiger Lagerung sowohl bei 50 °C als auch bei 70 °C, mehrmaligen Einfrier- und Auftauzyklen sowie dem Zentrifugieren bei 5000 Umdrehungen/min stand. Die Überführung der wäßrigen, kolloidalen Suspensionen von Organopolysiloxanen in Organosole von Organopolysiloxanen bringt keine bzw. nur eine unwesentliche Veränderung der Teilchendurchmesser der Organopolysiloxane mit sich. Es werden somit vorzugsweise Organosole von Organopolysiloxanen mit einem Teilchendurchmesser von 10 bis 150 nm erhalten. Die erfindungsgemäßen Organosole ähneln ihren wäßrigen Analoga auch im Hinblick auf ihr äußeres Erscheinungsbild wie der Opaleszenz, weisen aber naturgemäß eine gegenüber den wäßrigen, kolloidalen Suspensionen stark erniedrigte Oberflächenspannung auf. Im Gegensatz zu den wäßrigen, kolloidalen Suspensionen von Organopolysiloxanen mit einem Feststoffgehalt an Organopolysiloxan von maximal 20 Gewichts-%, jeweils bezogen auf das Gesamtgewicht der Suspension, weisen die erfindungsgemäßen Organosole von Organopolysiloxanen einen deutlich höheren Feststoffgehalt an Organopolysiloxan von vorzugsweise 30 bis 50 Gewichts-% auf. Die erfindungsgemäßen Organosole von Organopolysiloxanen wie z.B. Butanolsole oder Cyclohexanonsole sind in unpolaren organischen Lösungsmitteln wie Toluol oder Hexan bzw. in polymerisierbaren Monomeren wie Methylmethacrylat gut mischbar.

Die erfindungsgemäßen Organopolysiloxane lassen sich in Siliconpolymere sowie in andere duro- oder thermoplastische organische Polymere einarbeiten. Sie können anstatt hydrophobierter hochdisperser Kieselsäure verwendet werden. Im Gegensatz zur Verwendung von Pulvern treten beim Einmischen keine Agglomeration oder Aggregation auf, so daß die hohen Oberflächen der Organopolysiloxane in dem

Organosol und alle damit verbunden Eigenschaften voll zum Tragen kommen.

Herstellung der wäßrigen, kolloidalen Suspensionen von Organopolysiloxanen (A) bis (E):

I. Suspensionen (A) bis (C):

In einem 5 l Dreihalskolben mit Rührer, Tropftrichter, Thermometer und Destillationsaufsatz werden 3 l Wasser und jeweils der in der Tabelle 1 a angegebene Emulgator vorgelegt und auf 65 °C erwärmt. Unter Rühren wird bei 65 °C und 300 hPa (abs.) innerhalb 5 Stunden die Organosiliciumverbindung aus Tabelle 1 a durch eine in die Vorlage eintauchende Kapillare zudosiert. Das bei der Hydrolyse gebildete Methanol wird dabei abdestilliert, wobei der Druck so reguliert wird, daß das Volumen des Kolbeninhalts während der Silanzugabe konstant bleibt. Nach Beendigung der Silanzugabe wird bei 65 °C und 300 hPa (abs.) konstant eine 1/2 Stunde weitergerührt. Die wäßrigen Suspensionen (A) bis (C) können dann gegebenenfalls durch ein Polyamidnetz filtriert werden.

Es werden wäßrige Suspensionen von Organopolysiloxan (A) bis (C) erhalten, mit den in Tabelle 1 a angegebenen Werten für die elektronenmikroskopisch ermittelten, mittleren Teilchendurchmesser, den Viskositäten und den Feststoffgehalten an Organopolysiloxan.

II. Suspensionen (D) und (E):

In einen Rohrreaktor mit einem Inhalt von 4 l und einem Innendurchmesser von 3 cm, wobei der Reaktorinhalt jeweils bei der in Tabelle 1 b angegebenen Temperatur gehalten wird, werden jeweils 4 l je Stunde eines Wasser-Emulgator-Gemisches, das 24 g Dodecylbenzolsulfonsäure je 4 l Wasser enthält, mit Hilfe einer Schlauchpumpe kontinuierlich eingespeist. Über fünf verschiedene Einspeisungsstellen, die entlang der Längsachse des Rohrreaktors im ersten Drittel des Rohrreaktors angeordnet sind, werden jeweils 400 ml je Stunde der Organosiliciumverbindung aus Tabelle 1 b mit Hilfe von Dosierpumpen kontinuierlich zu dem Wasser-Emulgator-Gemisch zugegeben. Das aus dem Rohrreaktor austretende Reaktionsgemisch wird kontinuierlich auf einen Dünnschichtverdampfer gegeben. Im Dünnschichtverdampfer werden kontinuierlich 400 ml je Stunde eines Methanol-Wasser-Gemisches abdestilliert. Die Temperatur und Umlaufgeschwindigkeit des Dünnschichtverdampfers werden dabei jeweils so gewählt, daß jeweils das gleiche Volumen je Zeiteinheit abdestilliert wird, wie durch die Organosiliciumverbindung zugeführt wird. Die wäßrige Suspension wird nach der Destillation kontinuierlich in den Rohrreaktor rückgeführt und dann erneut mit der Organosiliciumverbindung beladen. Nach vier Durchgängen werden 1 l je Stunde der kolloidalen wäßrigen Suspension kontinuierlich abgenommen, 3 l je Stunde der kolloidalen wäßrigen Suspension kontinuierlich in den Rohrreaktor rückgeführt und 1 l je Stunde frisches Wasser-Emulgator-Gemisch kontinuierlich eingespeist. Die Organosiliciumverbindung aus Tabelle 1 b wird dabei jeweils über die fünf Einspeisungsstellen, wie oben beschrieben, mit einem konstanten Volumenstrom von 400 ml je Stunde kontinuierlich zudosiert.

Es werden wäßrige Suspensionen von Organopolysiloxan (D) und (E) erhalten, mit den in Tabelle 1 b angegebenen Werten für die elektronenmikroskopisch ermittelten, mittleren Teilchendurchmesser, den Viskositäten und den Feststoffgehalten an Organopolysiloxan.

Tabelle 1 a:

| ORGANOSILICIUMVERBINDUNG | EMULGATOR | Feststoff-gehalt[2] [Gew.%] | Viskosität [mPa.s bei 25°C] | $d^{3)}$ [nm] |
|---|---|---|---|---|
| (A) 1175 g Methyltrimethoxysilan | 3,5 g Dodecylbenzolsulfonsäure<br>13,5 g Natriumdodecylbenzolsulfonat | 19 | 6,6 | 15 |
| (B) 917 g Methyltrimethoxysilan<br>88 g Methacryloxypropyltrimethoxysilan (95:5)[1] | 3,5 g Dodecylbenzolsulfonsäure<br>13,5 g Natriumdodecylbenzolsulfonat | 17 | 5,4 | 23 |
| (C) 603 g Phenyltrimethoxysilan<br>204 g Methyltrimethoxysilan (7:3)[1] | 12,5 g Dodecylbenzolsulfonsäure | 18 | 7,8 | 33 |

1) Molverhältnis

2) Feststoffgehalt an Organopolysiloxan in der Suspension in Gew.%, bezogen auf das Gesamtgewicht der Suspension

3) Elektronenmikroskopisch ermittelter, mittlerer Teilchendurchmesser

Tabelle 1 b:

| ORGANOSILICIUMVERBINDUNG (400 ml Gemisch) | T (°C)+) | Feststoffgehalt 2) (Gew.%) | Viskosität (mPa.s bei 25°C) | d 3) (nm) |
|---|---|---|---|---|
| (D) 276,5 g Methyltrimethoxysilan<br>105 g Dimethyldimethoxysilan<br>(7:3) 1) | 65 | 20 | 8,7 | 37 |
| (E) 65,3 g Hexamethyldisiloxan<br>336 g Tetraethylsilikat<br>(1:4) 1) | 85 | 18 | 9,3 | 122 |

1) Molverhältnis

2) Festgehalt an Organopolysiloxan in der Suspension in Gew.%, bezogen auf das Gesamtgewicht der Suspension

3) Elektronenmikroskopisch ermittelter, mittlerer Teilchendurchmesser

+) Temperatur im Rohrreaktor

In den folgenden Beispielen beziehen sich alle Angaben von Teilen und Prozentsätzen auf das Gewicht, soweit nichts anderes angegeben ist.

Beispiel 1

1,0 Teile der Suspension (A), deren Herstellung oben beschrieben wurde, werden mit 1,0 Teilen Ethanol und 0,85 Teilen n-Butanol zu einem klaren Aqua-/Organosol vermischt. Bei 60 °C und 50 hPa (abs.) wird das Wasser (als Azeotrop) destillativ entfernt. Die Destillation wird bei einem Feststoffgehalt an Organopolysiloxan von 45 Gewichts-%, bezogen auf das Gesamtgewicht des Organosols, beendigt. Es wird ein opaleszierendes Organosol mit einem elektronenmikroskopisch ermittelten, mittleren Teilchendurchmesser von 23 nm und einer Viskosität von 48 mPa.s bei 25 °C erhalten, das ein schwach thixotropes Verhalten zeigt.

Beispiel 2

1,0 Teile der Suspension (A), deren Herstellung oben beschrieben wurde, werden mit 1,0 Teilen Ethanol und 0,85 Teilen Cyclohexanon zu einem klaren Aqua-/Organosol vermischt. Bei 60 °C und 20 hPa (abs.) wird das Wasser (als ternäres Azeotrop) destillativ entfernt, wobei auftretende Trübungen in dem Aqua-/Organosol durch Einsaugen von insgesamt 0,2 Teilen Ethanol wieder beseitigt werden. Die Destillation wird bei einem Feststoffgehalt an Organopolysiloxan von 40 Gewichts-%, bezogen auf das Gesamtgewicht des Organosols, beendigt. Es wird ein gelbliches Organosol mit einem elektronenmikroskopisch ermittelten, mittleren Teilchendurchmesser von 26 nm und einer Viskosität von 34 mPa.s bei 25 °C erhalten.

Beispiel 3

1,0 Teile der Suspension (A), deren Herstellung oben beschrieben wurde, werden mit 1,4 Teilen Ethanol und 0,85 Teilen Butylacrylat zu einem klaren Aqua-/Organosol vermischt. Bei 60 °C und 100 hPa (abs.) wird das Wasser (als Azeotrop) destillativ entfernt, wobei auftretende Trübungen in dem Aqua-/Organosol durch Einsaugen von insgesamt 0,2 Teilen Ethanol beseitigt werden. Die Destillation wird bei einem Feststoffgehalt an Organopolysiloxan von 50 Gewichts-%, bezogen auf das Gesamtgewicht des Organosols, beendigt. Es wird ein opaleszierendes Organosol mit einem elektronenmikroskopisch ermittelten, mittleren Teilchendurchmesser von 29 nm und einer Viskosität von 57 mPa.s bei 25 °C erhalten.

Beispiel 4

1,0 Teile der Suspension (B), deren Herstellung oben beschrieben wurde, werden mit 1,5 Teilen Ethanol und 0,85 Teilen Butylacrylat zu einem klaren Aqua-/Organosol vermischt. Bei 60 °C und 50 hPa (abs.) wird das Wasser (als Azeotrop) destillativ entfernt. Die Destillation wird bei einem Feststoffgehalt an Organopolysiloxan von 40 Gewichts-%, bezogen auf das Gesamtgewicht des Organosols, beendigt. Es wird ein opaleszierendes Organosol mit einem elektronenmikroskopisch ermittelten, mittleren Teilchendurchmesser von 27 nm und einer Viskosität von 38 mPa.s bei 25 °C erhalten.

Beispiel 5

1,0 Teile der Suspension (C), deren Herstellung oben beschrieben wurde, werden mit 0,8 Teilen Ethanol und 1,0 Teilen Butanol zu einem klaren Aqua-/Organosol vermischt. Bei 60 °C und 50 hPa (abs.) wird das Wasser (als Azeotrop) destillativ entfernt. Die Destillation wird bei einem Feststoffgehalt an Organopolysiloxan von 40 Gewichts-%, bezogen auf das Gesamtgewicht des Organosols, beendigt. Er wird ein opakes Organosol mit einem elektronenmikroskopisch ermittelten, mittleren Teilchendurchmesser von 39 nm und einer Viskosität von 42 mPa.s bei 25 °C erhalten.

Beispiel 6

1,0 Teile der Suspension (D), deren Herstellung oben beschrieben wurde, werden mit 1,25 Teilen Ethanol und 1,0 Teilen Cyclohexanon zu einem klaren Aqua-/Organosol vermischt. Bei 60 °C und 100 hPa (abs.) wird das Wasser (als Azeotrop) destillativ entfernt. Die Destillation wird bei einem Feststoffgehalt an Organopolysiloxan von 30 Gewichts-%, bezogen auf das Gesamtgewicht des Organosols, beendigt. Es wird ein Organosol mit einem elektronenmikroskopisch ermittelten, mittleren Teilchendurchmesser von 39 nm und einer Viskosität von 24 mPa.s bei 25 °C erhalten.

Beispiel 7

1,0 Teile der Suspension (E), deren Herstellung oben beschrieben wurde, werden mit 1,25 Teilen Ethanol und 1,0 Teilen Cyclohexanon zu einem klaren Aqua-/Organosol vermischt. Bei 60 °C und 100 hPa (abs.) wird das Wasser (als Azeotrop) destillativ entfernt. Die Destillation wird bei einem Feststoffgehalt an Organopolysiloxan von 30 Gewichts-%, bezogen auf das Gesamtgewicht des Organosols, beendigt. Er wird ein Organosol mit einem elektronenmikroskopisch ermittelten, mittleren Teilchendurchmesser von 136 nm und einer Viskosität von 31 mPa.s bei 25 °C erhalten.

Alle gemäß den Beispielen 1 bis 7 hergestellten Organosole erweisen sich im Vergleich zu den wäßrigen Suspensionen (A) bis (E) als äußerst beständig. So sind keine Veränderungen an den Organosolen nach mehrwöchigen Lagerungen bei 50 °C, nach mehrmaligen Einfrier- und Auftauzyclen sowie nach dem Zentrifugieren bei 5000 Umdrehungen/min zu beobachten. Alle gemäß den Beispielen 1 bis 7 hergestellten Organosole sind mit anderen organischen Lösungsmitteln wie Toluol oder Hexan bzw. mit polymerisierbaren Monomeren wie Methylmethacrylat mischbar.

Beispiel 8

1,0 Teile der Suspension (A), deren Herstellung oben beschrieben wurde, werden mit 2,0 Teilen Ethanol und 0,4 Teilen Hexadecanol-1 zu einem klaren Aqua-/Organosol vermischt. Bei 60° C und 50 hPa (abs.) wird das Wasser-Ethanolgemisch destillativ entfernt, wobei auftretende Trübungen in dem Aqua-/Organosol durch Einsaugen von insgesamt 0,4 Teilen Ethanol beseitigt werden. Es wird ein bei Raumtemperatur festes, bei 48° C zu einem bläulich transparenten Organosol schmelzendes Produkt, mit einem elektronenmikroskopisch ermittelten, mittleren Teilchendurchmesser von 22 nm und einem Feststoffgehalt an Organopolysiloxan von 33 Gew.-Prozent erhalten.

Beispiel 9

0,3 Teile Polyethylenglycol 6000 (mittleres Molekulargewicht 6000 g/Mol, Schmelzpunkt 62° C) werden in 1,0 Teilen der Suspension (A), deren Herstellung oben beschrieben wurde, zu einem klaren Aqua-/Organosol gelöst. Das Wasser wird anschließend bei 75° C und 20 hPa (abs.) destillativ entfernt. Es wird ein bei Raumtemperatur festes, bei 58° C zu einem opaken Organosol schmelzendes Produkt mit einem elektronenmikroskopisch ermittelten, mittleren Teilchendurchmesser von 18 nm und einem Feststoffgehalt an Organopolysiloxan von 40 Gew.-Prozent erhalten.

**Patentansprüche**
**Patentansprüche für folgende Vertragsstaaten : AT, BE, CH, DE, FR, GB, IT, LI, NL, SE**

1. Organosole von Organopolysiloxanen, wobei diese Organosole durch Zugabe von wasserlöslichen organischen Lösungsmitteln oder deren Gemischen oder wasserlöslichen Gemischen von wasserlöslichen und nicht wasserlöslichen organischen Lösungsmitteln zu wäßrigen kolloidalen Suspensionen von Organopolysiloxanen,
die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgatoren mit einer Geschwindigkeit von höchstens 5 Mol Organosiliciumverbindung je Stunde und Liter Wasser gewonnen wurden,
und anschließendem destillativen Entfernen des Wassers hergestellt wurden.

2. Verfahren zur Herstellung von Organosolen von Organopolysiloxanen nach Anspruch 1, dadurch gekennzeichnet, daß zu wäßrigen kolloidalen Suspensionen von Organopolysiloxanen,
die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgatoren mit einer Geschwindigkeit von höchstens 5 Mol Organosiliciumverbindung je Stunde und Liter Wasser gewonnen wurden,
wasserlösliche organische Lösungsmittel oder deren Gemische oder wasserlösliche Gemische von wasserlöslichen und nicht wasserlöslichen organischen Lösungsmitteln zugegeben werden und das Wasser anschließend destillativ entfernt wird.

3. Organosole von Organopolysiloxanen nach Anspruch 1, wobei diese Organosole durch Zugabe von wasserlöslichen organischen Lösungsmitteln oder deren Gemische oder wasserlöslichen Gemischen von wasserlöslichen und nicht wasserlöslichen organischen Lösungsmitteln zu wäßrigen kolloidalen Suspensionen von bei Raumtemperatur festen Organopolysiloxanen aus Einheiten der Formel

$$R_xSi(OR^1)_yO_{\frac{4-x-y}{2}} ,$$

worin x 0, 1, 2 oder 3, durchschnittlich 1,0 bis 2,0 und y 0, 1 oder 2, durchschnittlich 0,0 bis 0,5 ist und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substituenten aufweisen kann, bedeutet und $R^1$ gleich oder verschieden sein kann, ein Wasserstoffatom oder einen Alkyl- oder Alkoxyalkylenrest mit 1 bis 4 Kohlenstoffatom(en) je Rest bedeutet und mit der Maßgabe, daß die Organopolysiloxane in den verwendeten organischen Lösungsmitteln unlöslich sind, und anschließendem destillativen Entfernen des Wassers hergestellt wurden.

4. Organosole von Organopolysiloxanen nach Anspruch 1 oder 3 bzw. nach dem Verfahren nach Anspruch 2 hergestellte Organosole von Organopolysiloxanen, dadurch gekennzeichnet, daß die wasserlöslichen organischen Lösungsmittel oder deren Gemische oder wasserlösliche Gemische von wasserlöslichen und nicht wasserlöslichen organischen Lösungsmitteln in Mengen von jeweils mindestens 50 Gewichts-%, jeweils bezogen auf das Gesamtgewicht der jeweils eingesetzten kolloidalen wäßrigen Suspension von Organopolysiloxanen, zugegeben werden.

5. Organosole von Organopolysiloxanen nach Anspruch 1 oder 3 oder 4 bzw. nach dem Verfahren nach Anspruch 2 hergestellte Organosole von Organopolysiloxanen, dadurch gekennzeichnet, daß als wasserlösliche organische Lösungsmittel solche ausgewählt aus der Gruppe der niederen Alkanole wie Methanol, Ethanol, n-Propanol, i-Propanol und n-Butanol; Alkoxyalkanole wie Methoxyethanol, Ethoxyethanol und Propoxyethanol; Ethylenglykole mit 1 bis 6 Ethoxyeinheiten; Aceton und Tetrahydrofuran verwendet werden.

6. Organosole von Organopolysiloxanen nach Anspruch 1 oder 3 oder 4 bzw. nach dem Verfahren nach Anspruch 2 hergestellte Organosole von Organopolysiloxanen, dadurch gekennzeichnet, daß als wasserlösliche organische Lösungsmittel solche ausgewählt aus der Gruppe der bei Raumtemperatur flüssigen und festen Polyethylenglykole und bei Raumtemperatur festen Blockcopolymere aus Polyethylenglykolen und Polypropylenglykolen mit hohem Anteil an Polyethylenglykolen verwendet werden.

7. Organosole von Organopolysiloxanen nach Anspruch 1 oder 3 oder 4 bzw. nach dem Verfahren nach Anspruch 2 hergestellte Organosole von Organopolysiloxanen, dadurch gekennzeichnet, daß als nicht wasserlösliche organische Lösungsmittel solche ausgewählt aus der Gruppe von Cyclohexanon, Methylisobutylketon und Methacrylsäureester verwendet werden.

8. Organosole von Organopolysiloxanen nach Anspruch 1 oder 3 oder 4 bzw. nach dem Verfahren nach Anspruch 2 hergestellte Organosole von Organopolysiloxanen, dadurch gekennzeichnet, daß als nicht wasserlösliche organische Lösungsmittel solche ausgewählt aus der Gruppe der höheren Alkanole mit 8 bis 18 Kohlenstoffatomen, bei Raumtemperatur festen Polypropylenglykole und Alkylacetate mit $C_6$- bis $C_{13}$- Alkylresten verwendet werden.

**Patentansprüche für folgenden Vertragsstaat : ES**

1. Verfahren zur Herstellung von Organosolen von Organopolysiloxanen, dadurch gekennzeichnet, daß zu wäßrigen kolloidalen Suspensionen von Organopolysiloxanen, die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgatoren mit einer Geschwindigkeit von höchstens 5 Mol Organosiliciumverbindung je Stunde und Liter Wasser gewonnen wurden, wasserlösliche organische Lösungsmittel oder deren Gemische oder wasserlösliche Gemische von wasserlöslichen und nicht wasserlöslichen organischen Lösungsmitteln

zugegeben werden und das Wasser anschließend destillativ entfernt wird.

2. Verfahren zur Herstellung von Organosolen von Organopolysiloxanen nach Anspruch 1, dadurch gekennzeichnet, daß als wäßrige kolloidale Suspensionen von Organopolysiloxanen wäßrige kolloidale Suspensionen von bei Raumtemperatur festen Organopolysiloxanen aus Einheiten der Formel

$$R_xSi(OR^1)_yO_{\frac{4-x-y}{2}} ,$$

worin x 0, 1, 2 oder 3, durchschnittlich 1,0 bis 2,0 und y 0, 1 oder 2, durchschnittlich 0,0 bis 0,5 ist und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substituenten aufweisen kann, bedeutet und $R^1$ gleich oder verschieden sein kann, ein Wasserstoffatom oder einen Alkyl- oder Alkoxyalkylenrest mit 1 bis 4 Kohlenstoffatom(en) je Rest bedeutet und mit der Maßgabe, daß die Organopolysiloxane in den verwendeten organischen Lösungsmitteln unlöslich sind, verwendet werden.

3. Verfahren zur Herstellung von Organosolen von Organopolysiloxanen nach Anspruch 1 oder 2, dadurch gekennzeichnet, daß die wasserlöslichen organischen Lösungsmittel oder deren Gemische oder wasserlösliche Gemische von wasserlöslichen und nicht wasserlöslichen organischen Lösungsmitteln in Mengen von jeweils mindestens 50 Gewichts-%, jeweils bezogen auf das Gesamtgewicht der jeweils eingesetzten kolloidalen wäßrigen Suspension von Organopolysiloxanen, zugegeben werden.

4. Verfahren zur Herstellung von Organosolen von Organopolysiloxanen nach Anspruch 1, 2 oder 3, dadurch gekennzeichnet, daß als wasserlösliche organische Lösungsmittel solche ausgewählt aus der Gruppe der niederen Alkanole wie Methanol, Ethanol, n-Propanol, i-Propanol und n-Butanol; Alkoxyalkanole wie Methoxyethanol, Ethoxyethanol und Propoxyethanol; Ethylenglykole mit 1 bis 6 Ethoxyeinheiten; Aceton und Tetrahydrofuran verwendet werden.

5. Verfahren zur Herstellung von Organosolen von Organopolysiloxanen nach einem der Ansprüche 1 bis 4, dadurch gekennzeichnet, daß als wasserlösliche organische Lösungsmittel solche ausgewählt aus der Gruppe der bei Raumtemperatur flüssigen und festen Polyethylenglykole und bei Raumtemperatur festen Blockcopolymere aus Polyethylenglykolen und Polypropylenglykolen mit hohem Anteil an Polyethylenglykolen verwendet werden.

6. Verfahren zur Herstellung von Organosolen von Organopolysiloxanen nach einem der Ansprüche 1 bis 5, dadurch gekennzeichnet, daß als nicht wasserlösliche organische Lösungsmittel solche ausgewählt aus der Gruppe von Cyclohexanon, Methylisobutylketon und Methacrylsäureester verwendet werden.

7. Verfahren zur Herstellung von Organosolen von Organopolysiloxanen nach einem der Ansprüche 1 bis 6, dadurch gekennzeichnet, daß als nicht wasserlösliche organische Lösungsmittel solche ausgewählt aus der Gruppe der höheren Alkanole mit 8 bis 18 Kohlenstoffatomen, bei Raumtemperatur festen Polypropylenglykole und Alkylacetate mit $C_6$- bis $C_{13}$- Alkylresten verwendet werden.

**Claims**
**Claims for the following Contracting States : AT, BE, CH, DE, FR, GB, IT, LI, NL, SE**

1. Organosols of organopolysiloxanes, these organosols having been prepared by adding water-soluble organic solvents or mixtures thereof or water-soluble mixtures of water-soluble and water-insoluble organic solvents to aqueous colloidal suspensions of organopolysiloxanes which have been obtained by adding at least one alkoxysilane and/or the partial hydrolysate thereof and, if appropriate, mixed with an alkoxy group-free organo(poly)siloxane having a maximum of 8 siloxane units per molecule to water in the presence of emulsifiers at a maximum rate of 5 moles of organosilicon compound per hour and per litre of water, and subsequently removing the water by distillation.

2. Process for the preparation of organosols of organopolysiloxanes according to Claim 1, characterised in that water-soluble organic solvents or mixtures thereof or water-soluble mixtures of water-soluble and water-insoluble organic solvents are added to aqueous colloidal suspensions of organopolysiloxanes which have been obtained by adding at least one alkoxysilane and/or the partial hydrolysate thereof and, if appropriate, mixed with an alkoxy group-free organo(poly)siloxane having a maximum of 8 siloxane units per molecule to water in the presence of emulsifiers at a maximum rate of 5 mols of organosilicon compound per hour and per litre of water, and subsequently removing the water by distillation.

3. Organosols of organopolysiloxanes according to Claim 1, where these organosols have been prepared by adding water-soluble organic solvents or mixtures thereof or water-soluble mixtures of water-soluble and water-insoluble organic solvents to aqueous colloidal suspensions of organopolysiloxanes which are solid at room temperatures and comprise units of the formula

$$R_xSi(OR^1)_yO_{\frac{4-x-y}{2}}$$

in which x is 0, 1, 2 or 3, on average 1.0 to 2.0, and y is 0, 1 or 2, on average 0.0 to 0.5, and in which R may be identical or different and denotes a hydrogen atom or a monovalent hydrocarbon radical having 1 to 8 carbon atom(s) per radical, which may have substituents which are inert to water, and $R^1$ may be identical or different and denotes a hydrogen atom or an alkyl or alkoxyalkylene radical having 1 to 4 carbon atom(s) per radical, and with the proviso that the organopolysiloxanes are insoluble in the organic solvents used, and subsequently removing the water by distillation.

4. Organosols of organopolysiloxanes according to Claim 1 or 3 or organosols of organopolysiloxanes prepared by the process of Claim 2, characterised in that the water-soluble organic solvents or mixtures thereof or water-soluble mixtures of water-soluble and water-insoluble organic solvents are added in amounts of in each case at least 50% by weight, in each case based on the total weight of the colloidal aqueous suspension of organopolysiloxanes employed in each case.

5. Organosols of organopolysiloxanes according to Claim 1 or 3 or 4, or organosols of organopolysiloxanes prepared by the process of Claim 2, characterised in that the water-soluble organic solvents used are selected from the group consisting of lower alkanols, such as methanol, ethanol, n-propanol, i-propanol and n-butanol; alkoxyalkanols, such as methoxyethanol, ethoxyethanol and propoxyethanol; ethylene glycols having 1 to 6 ethoxy units; acetone and tetrahydrofuran.

6. Organosols of organopolysiloxanes according to Claim 1 or 3 or 4, or organosols of organopolysiloxanes prepared by the process of Claim 2, characterised in that the water-soluble organic solvents used are selected from the group consisting of polyethylene glycols which are liquid and solid at room temperature, and block copolymers, which are solid at room temperature, of polyethylene glycols and polypropylene glycols having a high proportion of polyethylene glycols.

7. Organosols of organopolysiloxanes according to Claim 1 or 3 or 4, or organosols of organopolysiloxanes prepared by the process of Claim 2, characterised in that the water-insoluble organic solvents used are selected from the group consisting of cyclohexanone, methyl isobutyl ketone and methacrylic acid esters.

8. Organosols of organopolysiloxanes according to Claim 1 or 3 or 4, or organosols of organopolysiloxanes prepared by the process of Claim 2, characterised in that the water-insoluble organic solvents used are selected from the group consisting of higher alkanols having 8 to 18 carbon atoms, polypropylene glycols which are solid at room temperature, and alkyl acetates having $C_6-C_{13}$-alkyl radicals.

**Claims for the following Contracting State : ES**

1. Process for the preparation of organosols of organopolysiloxanes, characterised in that water-soluble organic solvents or mixtures thereof or water-soluble mixtures of water-soluble and water-insoluble organic solvents are added to aqueous colloidal suspensions of organopolysiloxanes which have been obtained by adding at least one alkoxysilane and/or the partial hydrolysate thereof and, if appropriate, mixed with an alkoxy group-free organo(poly)siloxane having a maximum of 8 siloxane units per molecule to water in the presence of emulsifiers at a maximum rate of 5 moles of organosilicon compound per hour and per litre of water, and the water is subsequently removed by distillation.

2. Process for the preparation of organosols of organopolysiloxanes according to Claim 1, characterised in that aqueous colloidal suspensions of organopolysiloxanes which are solid at room temperature and comprise units of the formula

$$R_xSi(OR^1)_yO_{\frac{4-x-y}{2}}$$

in which x is 0, 1, 2 or 3, on average 1.0 to 2.0, and y is 0, 1 or 2, on average 0.0 to 0.5, and in which R may be identical or different and denotes a hydrogen atom or a monovalent hydrocarbon radical having 1 to 8 carbon atom(s) per radical, which may have substituents which are inert to water, and $R^1$ may be identical or different and denotes a hydrogen atom or an alkyl or alkoxyalkylene radical having 1 to 4 carbon atom(s) per radical, and with the proviso that the organopolysiloxanes are insoluble in the organic solvents used, are used as aqueous colloidal suspensions of organopolysiloxanes.

3. Process for the preparation of organosols of organopolysiloxanes according to Claim 1 or 2, characterised in that the water-soluble organic solvents or mixtures thereof or water-soluble mixtures of water-soluble and water-insoluble organic solvents are added in amounts of in each case at least 50% by weight, in each case based on the total weight of the colloidal aqueous suspension of organopolysiloxanes employed in each case.

4. Process for the preparation of organosols of organopolysiloxanes according to Claim 1, 2 or 3, characterised in that the water-soluble organic solvents used are selected from the group consisting of lower alkanols, such as methanol, ethanol, n-propanol, i-propanol and n-butanol; alkoxyalkanols, such as methoxyethanol, ethoxyethanol and propoxyethanol; ethylene glycols having 1 to 6 ethoxy units; acetone and tetrahydrofuran.

5. Process for the preparation of organosols of organopolysiloxanes according to one of Claims 1 to 4, characterised in that the water-soluble organic solvents used are selected from the group consisting of polyethylene glycols which are liquid and solid at room temperature, and block copolymers, which are solid at room temperature, of polyethylene glycols and polypropylene glycols having a high proportion of polyethylene glycols.

6. Process for the preparation of organosols of organopolysiloxanes according to one of Claims 1 to 5, characterised in that the water-insoluble organic solvents used are selected from the group consisting of cyclohexanone, methyl isobutyl ketone and methacrylic acid esters.

7. Process for the preparation of organosols of organopolysiloxanes according to one of Claims 1 to 6, characterised in that the water-insoluble organic solvents used are selected from the group consisting of higher alkanols having 8 to 18 carbon atoms, polypropylene glycols which are solid at room temperature, and alkyl acetates having $C_6-C_{13}$-alkyl radicals.

## Revendications

### Revendications pour les Etats contractants suivants : AT, BE, CH, DE, FR, GB, IT, LI, NL, SE

**1.** Organosols de polyorganosiloxanes, ces organosols ayant été préparés par addition de solvants organiques solubles dans l'eau ou de leurs mélanges ou de mélanges solubles dans l'eau de solvants organiques solubles dans l'eau et insolubles dans l'eau, à des suspensions colloïdales aqueuses de polyorganosiloxanes qui ont été préparées pour leur part par addition, à de l'eau, d'au moins un alcoxysilane et/ou de son produit d'hydrolyse partielle et éventuellement en mélange avec un (poly)-organosiloxane exempt de groupes alcoxy et ayant au plus huit motifs siloxanes par molécule, en présence d'émulsifiants, à un débit d'au moins 5 moles du composé organique du silicium par heure et par litre d'eau, puis élimination de l'eau par distillation.

**2.** Procédé pour préparer des organosols de polyorganosiloxanes, caractérisé en ce qu'on ajoute à des suspensions colloïdales aqueuses de polyorganosiloxanes qui ont été préparées pour leur part par addition, à de l'eau, d'au moins un alcoxysilane et/ou de son produit d'hydrolyse partielle et éventuellement en mélange avec un (poly)organosiloxane exempt de groupes alcoxy et ayant au plus huit motifs siloxanes par molécule, en présence d'émulsifiants, à un débit d'au moins 5 moles du composé organique du silicium par heure et par litre d'eau, des solvants organiques solubles dans l'eau ou leurs mélanges ou des mélanges solubles dans l'eau de solvants organiques solubles dans l'eau et insolubles dans l'eau, puis qu'on élimine l'eau par distillation.

**3.** Organosols de polyorganosiloxanes selon la revendication 1, ces organosols ayant été préparés par addition de solvants organiques solubles dans l'eau ou de leurs mélanges ou de mélanges solubles dans l'eau de solvants organiques solubles dans l'eau et insolubles dans l'eau, pour donner des suspensions colloïdales de polyorganosiloxanes solides à la température ambiante, constitués de motifs de formule

$$R_xSi(OR^1)yO_{(4-x-y)/2}$$

où x vaut 0, 1, 2 ou 3, en moyenne de 1,0 à 2,0, et y vaut 0, 1 ou 2 et en moyenne de 0,0 à 0,5, et les radicaux R peuvent être identiques ou différents et représentent un atome d'hydrogène ou un radical hydrocarboné monovalent ayant par radical 1 à 8 atomes de carbone, lequel peut comporter des substituants inertes vis-à-vis de l'eau, et les radicaux $R^1$ peuvent être identiques ou différents et représentent chacun un atome d'hydrogène ou un radical alkyle ou alcoxyalkylène ayant chacun 1 à 4 atomes de carbone par radical, et du moment que les polyorganosiloxanes sont insolubles dans les solvants organiques utilisés, l'eau étant ensuite éliminée par distillation.

**4.** Organosols de polyorganosiloxanes selon la revendication 1 ou 3, ou encore organosols de polyorganosiloxanes, préparés par le procédé selon la revendication 2, caractérisés en ce que les solvants organiques solubles dans l'eau, ou leurs mélanges, ou les mélanges solubles dans l'eau de solvants organiques solubles dans l'eau et insolubles dans l'eau, sont ajoutés en des quantités dans chaque cas d'au moins 50 % en poids, dans chaque cas par rapport au poids total de la suspension aqueuse colloïdale utilisée de polyorganosiloxanes.

**5.** Organosols de polyorganosiloxanes selon la revendication 1 ou 3 ou 4, ou organosols de polyorganosiloxanes préparés par le procédé selon la revendication 2, caractérisés en ce qu'on utilise comme solvants organiques aqueux des solvants organiques aqueux choisis dans l'ensemble comprenant les alcanols inférieurs, comme par exemple le méthanol, l'éthanol, le n-propanol, l'isopropanol et le n-butanol ; les alcoxyalcanols, comme par exemple le méthoxyéthanol, l'éthoxyéthanol et le propoxyéthanol ; les éthylèneglycols ayant de 1 à 6 motifs éthoxy ; l'acétone et le tétrahydrofuranne.

**6.** Organosols de polyorganosiloxanes selon la revendication 1 ou 3 ou 4, ou organosols de polyorganosiloxanes préparés par le procédé selon la revendication 2, caractérisés en ce qu'on utilise comme solvants organiques aqueux des solvants organiques aqueux choisis dans l'ensemble comprenant les polyéthylèneglycols liquides et solides à la température ambiante et les copolymères séquencés solides à la température ambiante constitués de polyéthylèneglycols et de polypropylèneglycols ayant un pourcentage élevé de polyéthylèneglycols.

**7.** Organosols de polyorganosiloxanes selon la revendication 1 ou 3 ou 4, ou organosols de polyorganosiloxanes préparés par le procédé selon la revendication 2, caractérisés en ce qu'on utilise comme solvants organiques insolubles dans l'eau des solvants organiques insolubles dans l'eau choisis dans l'ensemble comprenant la cyclohexanone, la méthylisobutylcétone et les méthacrylates.

**8.** Organosols de polyorganosiloxanes selon la revendication 1 ou 3 ou 4, ou organosols de polyorganosiloxanes préparés par le procédé selon la revendication 2, caractérisés en ce qu'on utilise comme solvants organiques insolubles dans l'eau des solvants organiques insolubles dans l'eau choisis dans l'ensemble comprenant les alcanols supérieurs ayant de 8 à 18 atomes de carbone, les polypropylèneglycols solides à la température ambiante et les acétates d'alkyle comportant des radicaux alkyle en $C_6$ à $C_{13}$.

**Revendications pour l'Etat contractant suivant : ES**

**1.** Procédé pour préparer des organosols de polyorganosiloxanes, caractérisé en ce qu'on ajoute à des suspensions colloïdales aqueuses de polyorganosiloxanes qui ont été préparées pour leur part par addition, à de l'eau, d'au moins un alcoxysilane et/ou de son produit d'hydrolyse partielle et éventuellement en mélange avec un (poly)organosiloxane exempt de groupes alcoxy et ayant au plus huit motifs siloxanes par molécule, en présence d'émulsifiants, à un débit d'au moins 5 moles du composé organique du silicium par heure et par litre d'eau, des solvants organiques solubles dans l'eau ou leurs mélanges ou des mélanges solubles dans l'eau de solvants organiques solubles dans l'eau et insolubles dans l'eau, puis qu'on élimine l'eau par distillation.

**2.** Procédé pour préparer des organosols de polyorganosiloxanes selon la revendication 1, caractérisé en ce qu'on utilise comme suspensions colloïdales aqueuses de polyorganosiloxanes des suspensions colloïdales aqueuses de polyorganosiloxanes solides à la température ambiante, constitués de motifs de formule

$R_xSi(OR^1)yO_{(4-x-y)/2}$

où x vaut 0, 1, 2 ou 3, en moyenne de 1,0 à 2,0, et y vaut 0, 1 ou 2 et en moyenne de 0,0 à 0,5, et les radicaux R peuvent être identiques ou différents et représentent un atome d'hydrogène ou un radical hydrocarboné monovalent ayant par radical 1 à 8 atomes de carbone, lequel peut comporter des substituants inertes vis-à-vis de l'eau, et les radicaux $R^1$ peuvent être identiques ou différents et représentent chacun un atome d'hydrogène ou un radical alkyle ou alcoxyalkylène ayant chacun 1 à 4 atomes de carbone par radical, et du moment que les polyorganosiloxanes sont insolubles dans les solvants organiques utilisés.

**3.** Procédé pour préparer des organosols de polyorganosiloxanes selon les revendications 1 ou 2, caractérisé en ce que les solvants organiques solubles dans l'eau, ou leurs mélanges, ou les mélanges solubles dans l'eau de solvants organiques solubles dans l'eau et insolubles dans l'eau, sont ajoutés en des quantités dans chaque cas d'au moins 50 % en poids, dans chaque cas par rapport au poids total de la suspension aqueuse colloïdale utilisée de polyorganosiloxanes.

**4.** Procédé pour préparer des organosols de polyorganosiloxanes selon les revendications 1, 2 ou 3, caractérisé en ce qu'on utilise comme solvants organiques aqueux des solvants organiques aqueux choisis dans l'ensemble comprenant les alcanols inférieurs, comme par exemple le méthanol, l'éthanol, le n-propanol, l'isopropanol et le n-butanol ; les alcoxyalcanols, comme par exemple le méthoxyéthanol, l'éthoxyéthanol et le propoxyéthanol ; les éthylèneglycols ayant de 1 à 6 motifs éthoxy ; l'acétone et le tétrahydrofuranne.

**5.** Procédé pour préparer des organosols de polyorganosiloxanes selon l'une des revendications 1 à 4, caractérisé en ce qu'on utilise comme solvants organiques aqueux des solvants organiques aqueux choisis dans l'ensemble comprenant les polyéthylèneglycols liquides et solides à la température ambiante et les copolymères séquencés solides à la température ambiante constitués de polyéthylèneglycols et de polypropylèneglycols ayant un pourcentage élevé de polyéthylèneglycols.

6. Procédé pour préparer des organosols de polyorganosiloxanes selon l'une des revendications 1 à 5, caractérisé en ce qu'on utilise comme solvants organiques insolubles dans l'eau des solvants organiques insolubles dans l'eau choisis dans l'ensemble comprenant la cyclohexanone, la méthylisobutylcétone et les méthacrylates.

7. Procédé pour préparer des organosols de polyorganosiloxanes selon l'une des revendications 1 à 6, caractérisé en ce qu'on utilise comme solvants organiques insolubles dans l'eau des solvants organiques insolubles dans l'eau choisis dans l'ensemble comprenant les alcanols supérieurs ayant de 8 à 18 atomes de carbone, les polypropylèneglycols solides à la température ambiante et les acétates d'alkyle comportant des radicaux alkyle en $C_6$ à $C_{13}$.